# EUROPEAN PATENT APPLICATION

(11) **EP 4 807 417 A1**
(43) Date of publication of application: **16.09.2026**
(21) Application number: 24903315.0
(22) Date of filing: 11.10.2024
(51) Int. Cl.: G02B 6/36, G02B 6/32, G02B 6/42

(54) **OPTICAL CONNECTOR**

(30) Priority: 13.12.2023 JP 2023209975
(71) Applicant: HONDA TSUSHIN KOGYO Co., Ltd., Nagano 389-0293 (JP)
(72) Inventor: OHKUBO, Yasuaki, Tokyo 105-0021 (JP); YOSHIZAKI, Tsuyoshi, Tokyo 105-0021 (JP)
(74) Representative: Wunderlich & Heim Patentanwälte PartG mbB
(86) International application number: PCT/JP2024/036548
(87) International publication number: WO 2025/126652

(57) **Abstract**

An optical connector 5 for connecting between an optical integrated circuit 3 and an optical fiber 40 has a plug member 7 to be attached to the optical fiber 40, a receptacle member 6 that should be arranged on the optical integrated circuit 3 and is connected to the plug member 7 for transmitting light L between the optical integrated circuit 3 and the optical fiber 40, and a locking mechanism 9 for switching between a locked state for keeping a state that the plug member 7 and the receptacle member 6 are connected to each other and an unlocked state that the plug member 7 and the receptacle member 6 are detachable from each other.

## Description

### CROSS-REFERENCE TO RELATED APPLICATION

The present application claims priority to Japanese patent application No. 2023-209975 (entitled "OPTICAL CONNECTOR") filed on December 13, 2023, and the entire contents of the above-listed application are hereby incorporated by reference for all purposes.

### TECHNICAL FIELD

The present invention generally relates to optical connectors, in particular to an optical connector containing a plug member to be attached to an optical fiber and a receptacle member configured so that the receptacle member can be attached to an optical integrated circuit and connected to the plug member.

### BACKGROUND ART

As speed of Internet communication has increased and computational capabilities of processing devices have been enhanced in recent years, a volume of communication data traffic between the processing devices has increased more and more. As the volume of communication data traffic between the processing devices has increased, it is required for a transmission device to be high-speed and high-capacity. In the high-speed and high-capacity transmission device, an optical fiber communication using optical fibers is employed. In order to enable the optical fiber communication, a large number of optical fibers are connected to an optoelectronic conversion element which can convert between optical signals to electrical signals. A lot of research for laying the large number of optical fibers immediately close to the optoelectronic conversion element have been underway for achieving speed enhancement and volume enlargement of the optical fiber communication as well as lower power consumption of the optoelectronic conversion element.

Patent document 1 discloses a typical method for connecting an optical fiber to an optical integrated circuit on which an optoelectronic conversion element is mounted. In the method disclosed in the patent document 1, the optical fiber is placed within a V-shaped groove formed on a glass substrate or a transparent epoxy substrate, and then an end surface of the optical fiber is polished. After that, the optical fiber is bonded and fixed to an optical waveguide of the optical integrated circuit while performing accurate positioning between the optical fiber and the optical waveguide of the optical integrated circuit, thereby connecting the optical fiber to the optical integrated circuit.

For this method, it is required to use a dedicated positioning tool for performing the accurate positioning between the optical fiber and the corresponding optical waveguide of the optical integrated circuit. Further, since a connection between the optical fiber and the optical waveguide of the optical integrated circuit is achieved by an adhesive fixing, it is impossible to remove the optical fiber from the optical integrated circuit once the optical fiber is connected to the optical integrated circuit.

Further, it is necessary to mount the optical integrated circuit on a circuit board such as a flexible printed circuit board and a rigid circuit board. However, in a state that the optical fiber is connected to the optical integrated circuit, handling the optical integrated circuit becomes difficult. As a result, it becomes difficult to perform works for mounting the optical integrated circuit onto the circuit board. On the other hand, in a case that the optical fiber is connected to the optical integrated circuit after the optical integrated circuit is mounted on the circuit board, the above-mentioned dedicated positioning tool cannot be used. Thus, it becomes difficult to perform works for connecting the optical fiber to the optical integrated circuit. Therefore, there have been strong needs for an optical connector that allows the optical fiber to be easily and detachably attached to the optical integrated circuit.

### RELATED ART DOCUMENT

### PATENT DOCUMENT

[Patent document1] JP S59-24816A

### SUMMARY OF THE INVENTION

### PROBLEM TO BE SOLVED BY THE INVENTION

The present invention has been made in view of the above-described problem of the conventional art. Accordingly, it is an object of the present invention to provide an optical connector that allows an optical fiber to be easily and detachably attached to an optical integrated circuit.

### MEANS FOR SOLVING THE PROBLEM

The above-mentioned object is achieved by the present invention defined by the following (1).
(1) An optical connector for connecting between an optical integrated circuit and an optical fiber, comprising:
   a plug member to be attached to the optical fiber;
   a receptacle member that should be arranged on the optical integrated circuit and is connected to the plug member for transmitting light between the optical integrated circuit and the optical fiber; and
   a locking mechanism for switching between a locked state for keeping a state that the plug member and the receptacle member are connected to each other and an unlocked state that the plug member and the receptacle member are detachable from each other.

### EFFECT OF THE INVENTION

The optical connector of the present invention has the locking mechanism for switching between the locked state for keeping the state that the plug member and the receptacle member are connected to each other and the unlocked state that the plug member and the receptacle member are detachable from each other. Therefore, according to the optical connector of the present invention, it is possible to easily and detachably attach the optical fiber to the receptacle member. As a result, it is possible to easily and detachably attach the optical fiber to the optical integrated circuit through the receptacle member.

### BRIEF DESCRIPTION OF THE DRAWINGS

[Fig. 1] Fig. 1 is a side view showing a state that a locking mechanism of an opto-electronic hybrid substrate according to a first embodiment is in a locked state.
[Fig. 2] Fig. 2 is a side view showing a state that the locking mechanism of the optoelectronic hybrid substrate shown in Fig. 1 is in an unlocked state.
[Fig. 3] Fig. 3 is a top view of an optical fiber cable.
[Fig. 4] Fig. 4 is a cross-sectional view of a plug member.
[Fig. 5] Fig. 5 is a front view of the plug member.
[Fig. 6] Fig. 6 is a front view showing a modified example of the plug member.
[Fig. 7] Fig. 7 is a top view of the plug member.
[Fig. 8] Fig. 8 is a cross-sectional view of a receptacle member.
[Fig. 9] Fig. 9 is a bottom view of the receptacle member.
[Fig. 10] Fig. 10 is a front view of the receptacle member.
[Fig. 11] Fig. 11 is a top view of the receptacle member.
[Fig. 12] Fig. 12 is a top view showing a positioning mechanism.
[Fig. 13] Fig. 13 is a cross-sectional view showing a state that the receptacle member and the plug member are positioned to each other by the positioning mechanism.
[Fig. 14] Fig. 14 is a top view of a locking member.
[Fig. 15] Fig. 15 is a side view of the locking member.
[Fig. 16] Fig. 16 is another side view of the locking member viewed from an opposite side of a viewing side of Fig. 15.
[Fig. 17] Fig. 17 is a side view showing the unlocked state.
[Fig. 18] Fig. 18 is a cross-sectional view showing a receptacle member of an optical connector according to a second embodiment.
[Fig. 19] Fig. 19 is a top view of the receptacle member shown in Fig. 18.
[Fig. 20] Fig. 20 is a cross-sectional view showing a receptacle member of an optical connector according to a third embodiment.
[Fig. 21] Fig. 21 is a cross-sectional view showing a modified example of the receptacle member shown in Fig. 20.
[Fig. 22] Fig. 22 is a cross-sectional view showing a receptacle member of an optical connector according to a fourth embodiment.
[Fig. 23] Fig. 23 is a top view showing a locking member of an optical connector according to a fifth embodiment.
[Fig. 24] Fig. 24 is a front view of the locking member.
[Fig. 25] Fig. 25 is a side view of the locking member.
[Fig. 26] Fig. 26 is another side view of the locking member viewed from an opposite side of a viewing side of Fig. 25.
[Fig. 27] Fig. 27 is a top view showing a locking mechanism of an optical connector according to a sixth embodiment.
[Fig. 28] Fig. 28 is a top view showing a base member of the optical connector.
[Fig. 29] Fig. 29 is a side view showing a locking member of the optical connector.
[Fig. 30] Fig. 30 is another side view of the locking member viewed from an opposite side of a viewing side of Fig. 29.
[Fig. 31] Fig. 31 is a cross-sectional view of the locking member.
[Fig. 32] Fig. 32 is a top view showing an optical connector according to a seventh embodiment.
[Fig. 33] Fig. 33 is a cross-sectional view showing an optical connector according to an eighth embodiment.

### DETAILED DESCRIPTION

An optical connector of the present invention will be described in detail with reference to preferred embodiments shown in the attached drawings.

### <First embodiment>

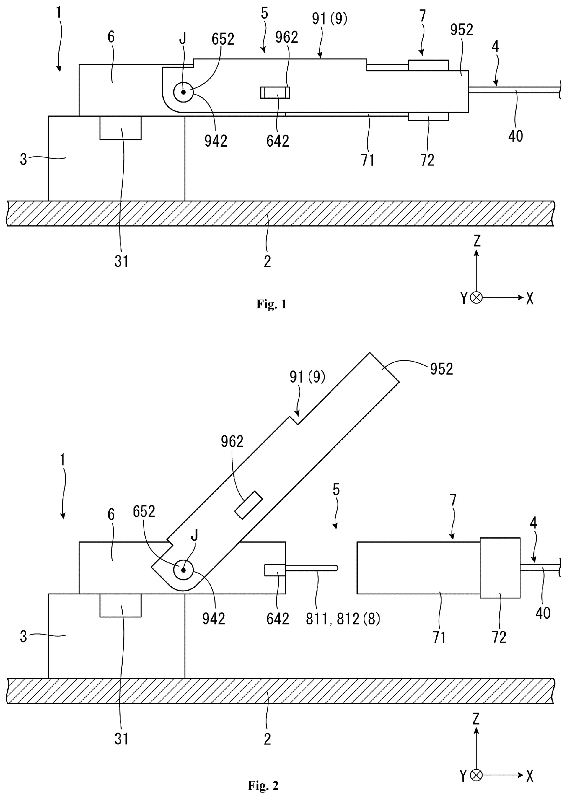

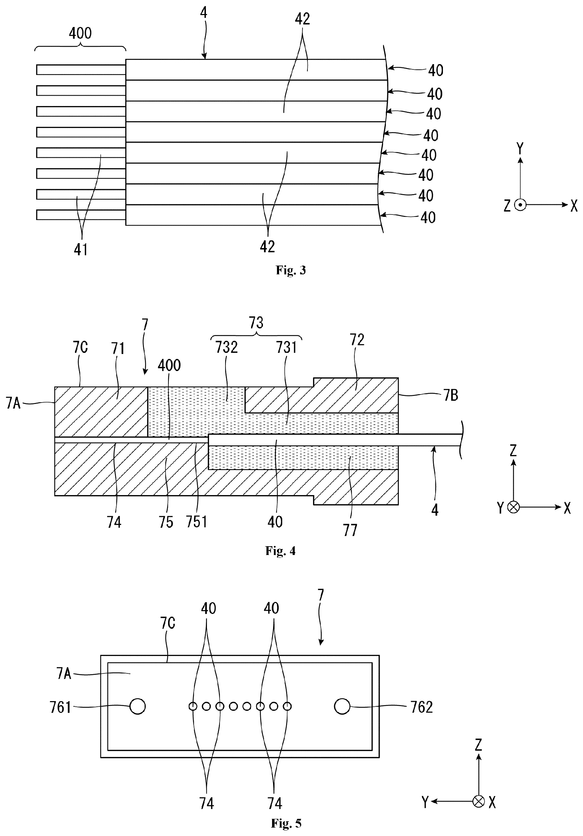

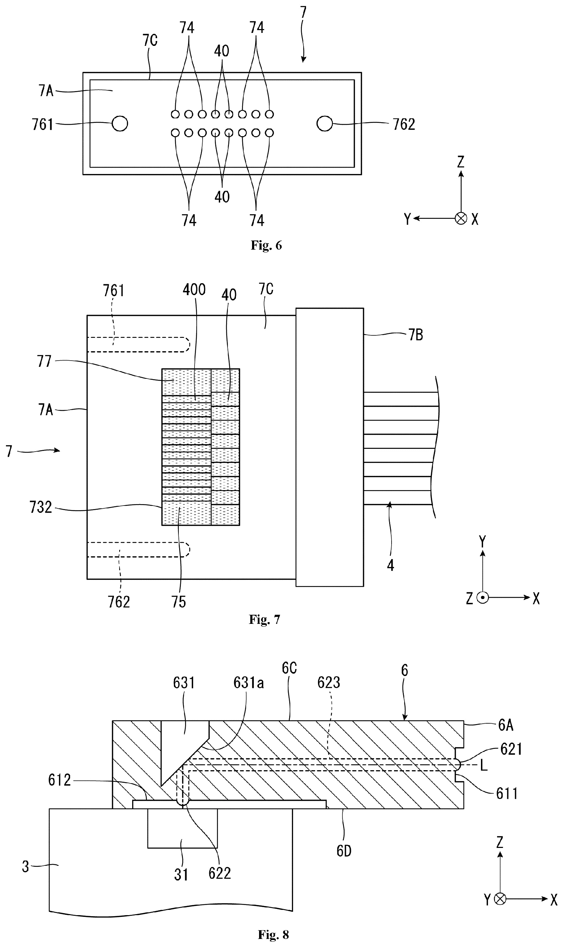

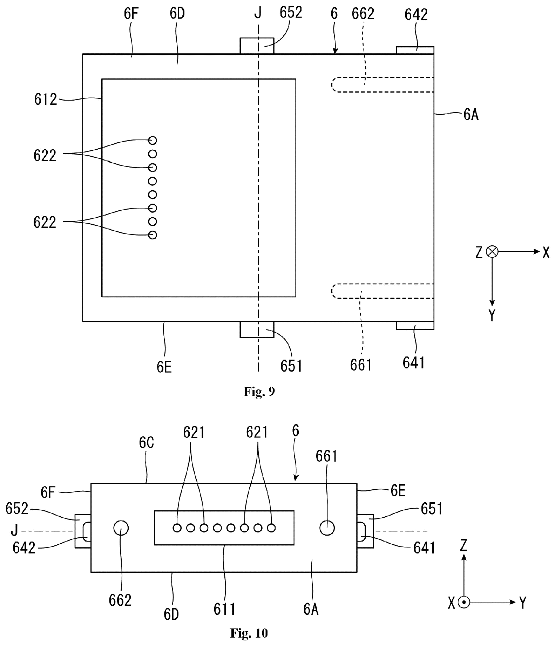

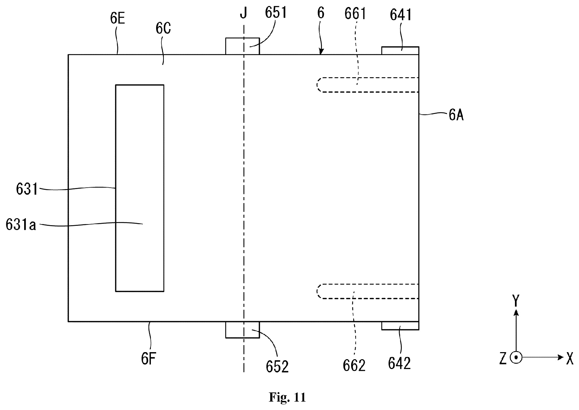

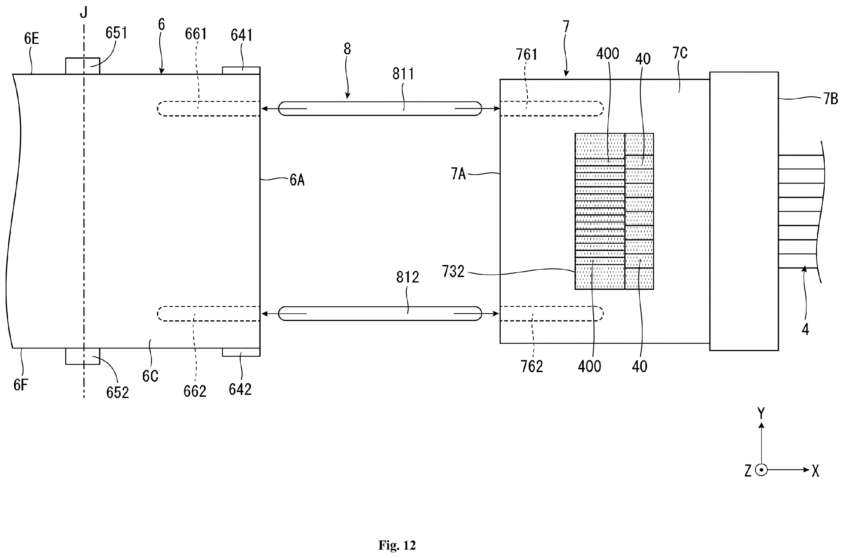

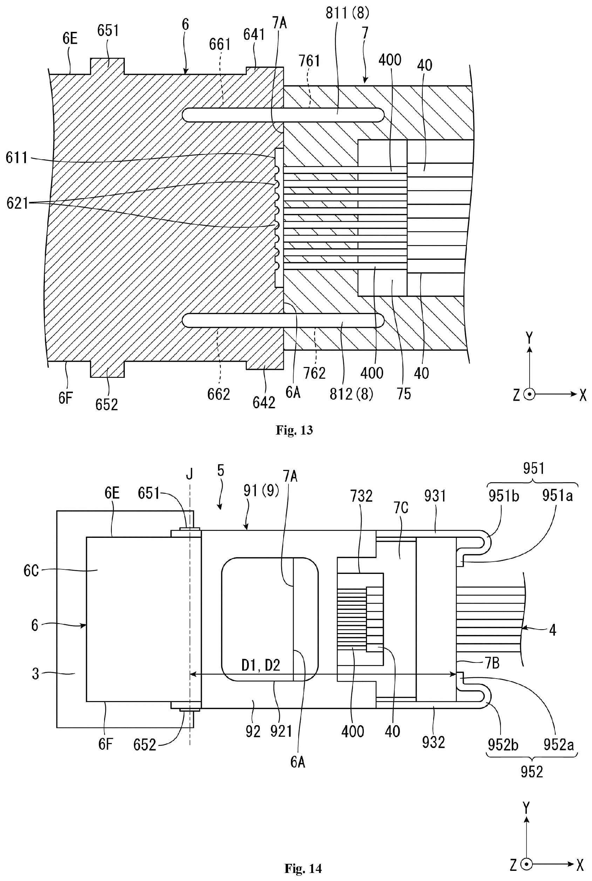

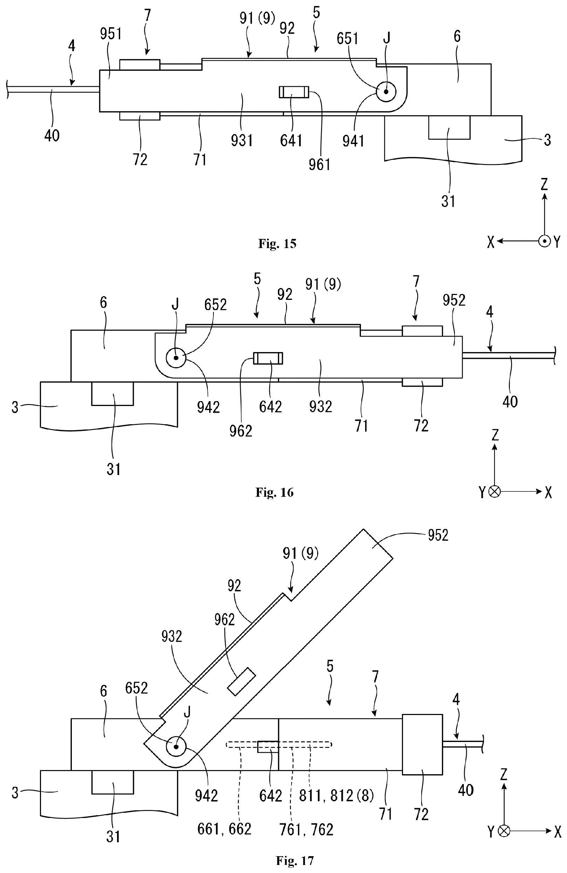

Fig. 1 is a side view showing a state that a locking mechanism of an opto-electronic hybrid substrate according to the first embodiment is in a locked state. Fig. 2 is a side view showing a state that the locking mechanism of the optoelectronic hybrid substrate shown in Fig. 1 is in an unlocked state. Fig. 3 is a top view of an optical fiber cable. Fig. 4 is a cross-sectional view of a plug member. Fig. 5 is a front view of the plug member. Fig. 6 is a front view showing a modified example of the plug member. Fig. 7 is a top view of the plug member. Fig. 8 is a cross-sectional view of a receptacle member. Fig. 9 is a bottom view of the receptacle member. Fig. 10 is a front view of the receptacle member. Fig. 11 is a top view of the receptacle member. Fig. 12 is a top view showing a positioning mechanism. Fig. 13 is a cross-sectional view showing a state that the receptacle member and the plug member are positioned to each other by the positioning mechanism. Fig. 14 is a top view of a locking member. Fig. 15 is a side view of the locking member. Fig. 16 is another side view of the locking member viewed from an opposite side of a viewing side of Fig. 15. Fig. 17 is a side view showing the unlocked state.

It is noted that an X-axis, a Y-axis and a Z-axis which are perpendicular to each other are illustrated in each drawing for convenience of explanation. Further, a direction along the X-axis is sometimes referred to as "an X-axis direction", a direction along the Y-axis is sometimes referred to as "a Y-axis direction", and a direction along the Z-axis direction is sometimes referred to as "a Z-axis direction" in the following description. In addition, an arrowhead side of each axis is sometimes referred to as a "positive side," and an opposite side of the arrowhead side of each axis is sometimes referred to as a "negative side." Furthermore, the Z-axis direction positive side is sometimes referred to as an "upper side," and the Z-axis direction negative side is referred to as a "lower side."

An optoelectronic hybrid substrate 1 shown in Figs. 1 and 2 has a substrate 2, an optical integrated circuit 3 mounted on the substrate 2, an optical fiber cable 4 containing a plurality of optical fibers 40, and an optical connector 5 for optically connecting between the optical integrated circuit 3 and the optical fiber cable 4. Further, the optical connector 5 has a receptacle member 6 arranged on the optical integrated circuit 3, a plug member 7 attached to the optical fiber cable 4, a positioning mechanism 8 for positioning the receptacle member 6 and the plug member 7 to each other, and a locking mechanism 9 for fixing the receptacle member 6 and the plug member 7 to each other in a state that the receptacle member 6 and the plug member 7 are positioned to each other by the positioning mechanism 8 and keeping this state. Each of these components will be described in order.

### ≪Substrate 2≫

The substrate 2 is a circuit board. For example, a flexible printed circuit board, a rigid circuit board, and the like may be used as the substrate 2. In this regard, the substrate 2 may be a circuit board used as a finished product or a circuit board for a jig temporarily used during an assembling process of a product and separated from the product after the assembling process.

### ≪Optical integrated circuit 3≫

As shown in Figs. 1 and 2, the optical integrated circuit 3 has a light receiving and emitting unit 31. The light receiving and emitting unit 31 has a light receiving element for receiving light L (a light signal) and a light emitting element for emitting the light L. For example, a vertical-cavity surface-emitting laser (VCSEL), a light-emitting diode (LED), an organic EL element, and the like may be used as the light emitting element. For example, a photodiode (PD, APD) and the like may be used as the light receiving element. Further, the light receiving and emitting unit 31 may have an optical waveguide optically connected to the light receiving element or the light emitting element. Further, for example, the light receiving and emitting unit 31 may be formed from silicon. An optical axis of the light receiving and emitting unit 31 is aligned with the Z-axis. However, a configuration of the light receiving and emitting unit 31 is not particularly limited. For example, the receiving and emitting unit 31 may be configured to have only one of the light receiving element and the light emitting element. In this case, a communication is a one-way communication that only transmits the light L or only receives the light signal. The optical integrated circuit 3 may further include an individual memory IC such as a logic IC, a RAM, and a ROM, an IC in which circuits of these memory ICs are combined as a single chip, and an electrical element (not shown in the drawings) such as a capacitor, a coil component, a resistive element, and a diode.

The optical integrated circuit 3 has been explained in the above description. However, the configuration of the optical integrated circuit 3 is not particularly limited as long as it can perform its functions.

### ≪Optical fiber cable 4≫

As shown in Fig. 3, the optical fiber cable 4 has the plurality of optical fibers 40 aligned along the Y-axis direction. The number of optical fibers 40 is not particularly limited. However, in the present embodiment, the number of optical fibers 40 is eight. Further, a plurality of optical fiber cables 4 may be used. In this case, the plurality of optical fiber cables 4 can be used in a state that the optical fiber cables 4 are stacked along the Z-axis direction. Each optical fiber 40 has a core portion 41 constituted of a core and a cladding surrounding the core, and a covering layer 42 surrounding the core portion 41. In the optical fiber cable 4, the covering layer 42 is stripped from a tip end portion of each optical fiber 40 to expose the core portion 41 in order to attach the plug member 7 thereto in a proceeding process. Hereinafter, a portion where the core portion 41 is exposed is also referred to as "an exposed portion 400" for convenience of explanation.

### ≪Optical connector 5≫

As shown in Figs. 1 and 2, the optical connector 5 has the receptacle member 6 arranged on the optical integrated circuit 3, the plug member 7 to be attached to the optical fiber cable 4, the positioning mechanism 8 for positioning the receptacle member 6 and the plug member 7 to each other, and the locking mechanism 9 for fixing the receptacle member 6 and the plug member 7 to each other.

### -Plug member 7-

As shown in Fig. 4, the plug member 7 has a tip end portion 71 whose outer shape is formed by rectangular parallelepiped bodies having different sizes and coaxially arranged along the X-axis direction and which is located on the tip side, and a base end portion 72 connected to a base end portion of the tip end portion 71 and having a diameter which is larger than a diameter of the tip end portion 71.

Further, the plug member 7 has an L-shaped through-hole 73 formed by an intersection of a first hole 731 and a second hole 732. The first hole 731 opens at a base end surface 7B of the plug member 7 so as to extend in the X-axis direction and have a bottom. The second hole 732 opens at an upper surface 7C of the plug member 7 so as to extend in the Z-axis direction and have a bottom. Further, the optical fiber cable 4 is inserted into the first hole 731 from the base side of the plug member 7.

Further, the plug member 7 has a plurality of insertion holes 74 passing through the tip end surface 7A and an inner surface of the through-hole 73 (a bottom surface of the first hole 731) and linearly formed along the X-axis direction. As shown in Fig. 5, the number of insertion holes 74 corresponds to the number of optical fibers 40. In the present embodiment, the number of insertion holes 74 is eight. In the case that the plurality of optical fiber cables 4 are used in the state that the plurality of optical fiber cables 4 are stacked in the Z-axis direction as described above, additional insertion holes 74 may be provided so as to be aligned in the Y-axis direction at positions slightly offset from each other in the Z-axis direction as shown in Fig. 6. Furthermore, the plurality of insertion holes 74 are provided at equal intervals along the Y-axis direction, specifically, provided at the same pitch as a pitch of the optical fibers 40. Furthermore, the exposed portion 400 of the corresponding optical fiber 40 is inserted into each insertion hole 74 from the base side. By setting the pitch of the insertion holes 74 to coincide with the pitch of the optical fibers 40 as described above, insertion of the optical fibers 40 into the insertion holes 74 is facilitated.

Further, a tip end surface of each optical fiber 40 is exposed from the tip end surface 7A of the plug member 7 through the insertion hole 74. Specifically, the tip end surface of each optical fiber 40 is located on the same plane as the tip end surface 7A of the plug member 7. With this configuration, it is possible to protect each optical fiber 40 as well as shorten a separation distance between each optical fiber 40 and the receptacle member 6 as much as possible, thereby stably performing transmission of the light L between the receptacle member 6 and the optical fibers 40. However, the tip end surface of each optical fiber 40 is not limited to this configuration. The tip end surface of each optical fiber 40 may protrude from the tip end surface 7A of the plug member 7, or conversely, may be retracted toward an inner side of the plug member 7 from the tip end surface 7A.

Further, in a plan view of the base end surface 7B, each insertion hole 74 overlaps with the first hole 731. With this configuration, the optical fiber cable 4 can be easily attached to the plug member 7 because it is sufficient that the optical fiber cable 4 is only inserted linearly along the X-axis direction with respect to the plug member 7.

Further, the plug member 7 has a support base 75 provided at a corner portion of the L-shaped through-hole 73 (the intersection of the first hole 731 and the second hole 732). The support base 75 supports the optical fiber cable 4 inserted into the insertion holes 74 from the lower side and on the base side of the insertion holes 74. The support base 75 has a support surface on which the optical fiber cable 4 should be placed. A plurality of grooves 751 linearly extending along the X-axis direction are formed on the support surface so as to extend each insertion hole 74. The corresponding optical fiber 40 is placed in each groove 751. By providing the grooves 751 on the support surface as described above, it is possible to respectively align the plurality of optical fibers 40 along the grooves 751 in front of the insertion holes 74, thereby easily inserting the optical fibers 40 into the insertion holes 74. Namly, the support base 75 provides a function of supporting the optical fiber cable 4 as well as a function as a guide for guiding each optical fiber 40 to the corresponding insertion hole 74.

Further, as shown in Fig. 5, the plug member 7 has a pair of second fitting holes 761, 762 formed on the tip end surface 7A so as to extend along the X-axis direction. The pair of second fitting holes 761, 762 are respectively located on both Y-axis direction side portions of the tip end surface 7A so as to sandwich the plurality of insertion holes 74. As described later, pins 811, 812 of the positioning mechanism 8 are respectively inserted into these second fitting holes 761, 762.

Constituent material for the above-described plug member 7 is not particularly limited. For example, the plug member 7 may be formed from polyetherimide (PEI), polyimide (PI), polyamide (PA), polybutylene terephthalate (PBT), polyphenylene sulfide (PPS), liquid crystal polymer (LCP), and other resin material that have all of heat resistance, strength, molding shrinkage rate, thermal expansion coefficient, flame retardancy, water absorption, and the like required for the plug member 7. Further, the plug member 7 can be formed by an injection molding method.

Further, as shown in Figs. 4 and 7, the plug member 7 has an adhesive 77 that is filled in the through-hole 73 to bond and fix the plug member 7 and the optical fiber cable 4 to each other. With this configuration, the plug member 7 and the optical fiber cable 4 are firmly fixed to each other, thereby appropriately keeping a state that the plug member 7 is attached to the optical fiber cable 4. Furthermore, it is possible to cover the optical fiber cable 4 (particularly, the exposed portion 400) in the through-hole 73 with the adhesive 77 to protect the optical fiber cable 4.

The adhesive 77 is not particularly limited. However, it is preferable that the adhesive 77 is thermosetting resin material. Further, the thermosetting resin material is not particularly limited. For example, one of the thermosetting resin material contains an epoxy resin, a phenolic resin, an urea resin, a melamine resin, a polyester resin, a polyimide resin, a silicone resin, a polyurethane resin, and the like, or two or more of these resins mixed with each other may be used as the adhesive 77. By using the thermosetting resin material as the adhesive 77 as described above, the plug member 7 can be easily attached to the optical fiber cable 4.

Next, a method for attaching the plug member 7 to the optical fiber cable 4 will be briefly described. First, the plug member 7 is prepared and the adhesive 77 in an uncured state is filled in the through-hole 73. Next, the optical fiber cable 4 is prepared and the exposed portion 400 is formed on each optical fiber 40. After that, the optical fiber cable 4 is inserted into the first hole 731 and the insertion holes 74 sequentially from the base side of the plug member 7 to protrude the tip end portion of each optical fiber 40 from the tip end surface 7A of the plug member 7. At this time, the grooves 751 formed on the support base 75 serve as the guide for guiding each optical fiber 40 to the corresponding insertion hole 74. Thus, each optical fiber 40 can be easily inserted into the insertion hole 74.

Next, the optical fiber cable 4 and the plug member 7 are fixed to each other. Finally, a portion of each optical fiber 40 protruding from the tip end surface 7A of the plug member 7 is cut off and then a tip end surface (cut surface) is finished by polishing or similar means. As a result, the tip end surface of each optical fiber 40 is located on the same plane as the tip end surface 7A of the plug member 7. According to this procedure, the attachment of the plug member 7 to the optical fiber cable 4 is completed.

According to the above-described method, the plug member 7 can be easily attached to the optical fiber cable 4. However, the method for attaching the plug member 7 to the optical fiber cable 4 is not particularly limited. For example, the adhesive 77 may be filled in the through-hole 73 after the optical fiber cable 4 is inserted into the plug member 7.

Although the plug member 7 has been described in the above description, the configuration of the plug member 7 is not particularly limited. For example, the second hole 732 or the support base 75 may be omitted. Further, for example, the pitch of the insertion holes 74 may be larger than the pitch of the optical fibers 40.

### -Receptacle member 6-

As shown in Fig. 1, the receptacle member 6 is interposed between the optical integrated circuit 3 and the optical fiber cable 4 to optically connect between the optical integrated circuit 3 and the optical fiber cable 4. For example, the above-mentioned receptacle member 6 can be formed from optical transparency material, such as resin material and glass material. The receptacle member 6 of the present embodiment is formed from the resin material. By forming the receptacle member 6 from the resin material, it becomes easier to form the receptacle member 6. The resin material is not particularly limited. For example, polyetherimide (PEI), polyimide (PI), polyamide (PA), methacrylic acid methyl ester (PMMA), polycarbonate (PC), and other resin material which have all of heat resistance, strength, molding shrinkage rate, thermal expansion coefficient, flame retardancy, water absorption, and other properties required for the receptacle member 6 may be used. Furthermore, the receptacle member 6 may be formed by injection molding.

The above-mentioned receptacle member 6 is placed on an upper surface of the optical integrated circuit 3 and fixed to the optical integrated circuit 3 through an adhesive agent (not shown) as shown in Fig. 8. Further, the receptacle member 6 has a second concave portion 612 formed on its lower surface 6D. Furthermore, a plurality of second collimator lenses 622 are provided on a bottom surface of the second concave portion 612. The plurality of second collimator lenses 622 are provided along the Y-axis direction at regular intervals (the same pitch as the pitch of the insertion holes 74) as shown in Fig. 9. Each second collimator lens 622 directly faces the light receiving and emitting unit 31 so that an optical axis of each second collimator lens 622 and the optical axis of the light receiving and emitting unit 31 are aligned. With this configuration, the receptacle member 6 and the light receiving and emitting unit 31 are optically connected to each other. In this regard, in the case that the light receiving and emitting unit 31 has the optical waveguide connected to the light receiving element or the light emitting element as described above, each second collimator lens 622 faces an end portion (an emitting and receiving portion for the light L) of the optical waveguide. Further, an anti-reflection coating (not shown) is formed on a surface of each second collimator lens 622 for preventing reflection of the light L. In this regard, the number of second collimator lenses 622 corresponds to the number of optical fibers 40. In the present embodiment, the number of second collimator lenses 622 is eight. In the case that the plurality of optical fiber cables 4 are used in the state that the optical fiber cables 4 are stacked in the Z-axis direction as described above, additional second collimator lenses 622 may be arranged so as to be aligned in the Y-axis direction at positions slightly spaced apart from each other in the X-axis direction.

Further, a height of each second collimator lens 622 is less than a depth of the second concave portion 612. Thus, each second collimator lens 622 is entirely positioned within the second concave portion 612 and does not protrude from the lower surface 6D. With this configuration, it is possible to avoid contact between each second collimator lens 622 and the optical integrated circuit 3, thereby effectively suppressing damage of each second collimator lens 622 caused by the contact with the optical integrated circuit 3. However, each second collimator lens 622 is not limited to this configuration. For example, each second collimator lens 622 may be located on the same plane as the lower surface 6D or may protrude from the lower surface 6D.

Further, as shown in Fig. 8, the receptacle member 6 has a tip end surface 6A that contacts the tip end surface 7A of the plug member 7. Furthermore, the receptacle member 6 has a first concave portion 611 provided on the tip end surface 6A. Furthermore, a plurality of first collimator lenses 621 are provided on a bottom surface of the first concave portion 611. As shown in Fig. 10, the plurality of first collimator lenses 621 are provided along the Y-axis direction at regular intervals (the same pitch as the pitch of the insertion holes 74). Further, each first collimator lens 621 directly faces the tip end surface of the corresponding optical fiber 40 in a state that the receptacle member 6 and plug member 7 are connected to each other. In this regard, an anti-reflection coating (not shown) is formed on a surface of each first collimator lens 621 for preventing reflection of the light L. Further, the number of first collimator lenses 621 corresponds to the number of optical fibers 40. In the present embodiment, the number of first collimator lenses 621 is eight. In the case that the plurality of optical fiber cables 4 are used in the state that the optical fiber cables 4 are stacked in the Z-axis direction as described above, additional first collimator lenses 621 may be arranged so as to be aligned in the Y-axis direction at positions slightly spaced apart from each other in the Z-axis direction, for example.

A height of each first collimator lens 621 is less than a depth of the first concave portion 611. Thus, each first collimator lens 621 is entirely positioned within the first concave portion 611 and does not protrude from the tip end surface 6A. With this configuration, it is possible to avoid contact between each first collimator lens 621 and the plug member 7, thereby effectively preventing damage of each first collimator lens 621 caused by the contact with the plug member 7. However, the present invention is not limited to this configuration. For example, each first collimator lens 621 may be located on the same plane as the tip end surface 6A or may protrude from the tip end surface 6A.

Further, as shown in Figs. 8 and 11, the receptacle member 6 has a first recess 631 formed on its upper surface 6C and extending along the Y-axis direction. An inner surface of the first recess 631 constitutes a light-reflecting surface 631a (mirror) for reflecting the light L passing through the receptacle member 6. The light-reflecting surface 631a has a planar shape inclined at 45° with respect to the X-axis direction.

The Light L emitted from the light receiving and emitting unit 31 is collimated into parallel light by the corresponding second collimator lens 622 directly facing the light receiving and emitting unit 31 and enters the receptacle member 6. The parallel light L then travels inside the receptacle member 6 in the positive side of the Z-axis direction. Next, the parallel light L is reflected at the light-reflecting surface 631a by 90° and then travels in the positive side of the X-axis direction. Next, the parallel light L is emitted toward the outside of the receptacle member 6 from the corresponding first collimator lens 621. The light L emitted from the first collimator lens 621 is focused by the first collimator lens 621 and enters the optical fiber 40 through the tip end surface of the optical fiber 40 directly facing the first collimator lens 621 near a focal point of the first collimator lens 621.

Conversely, the light L emitted from the tip end surface of the optical fiber 40 is collimated into parallel light by the corresponding first collimator lens 621 directly facing the optical fiber 40 and enters the receptacle member 6. The parallel light L then travels in the negative side of the X-axis direction and then is reflected at the light-reflecting surface 631a by 90 ° . Next, the parallel light L travels in the negative side of the Z-axis direction and then is emitted toward the outside of the receptacle member 6 from the corresponding second collimator lens 622. The light L emitted from the second collimator lens 622 is focused by the second collimator lens 622 and enters the light receiving and emitting unit 31 directly facing the second collimator lens 622 near a focal point of the second collimator lens 622.

As described above, the light-reflecting surface 631a is provided in an optical path 623 of the light L passing through the receptacle member 6 and has an optical path changing function of changing a direction of the optical path 623. By providing the above-mentioned light-reflecting surface 631a, it becomes possible to freely design the optical path 623, thereby increasing design flexibility of the optical connector 5. If necessary, a reflective film may be deposited on a surface of the light-reflecting surface 631a. Examples of the reflective film include various metal films such as Au, Ag, and Al. A method for forming the metal film may be a physical vapor deposition method such as a vacuum deposition, a chemical vapor deposition method such as a CVD, and a plating method.

However, the present invention is not limited to this configuration. The light-reflecting surface 631a may be omitted. Further, a plurality of multiple light-reflecting surface 631a may be provided at different positions in the optical path 623 and the optical path 623 may be changed multiple times along its course.

Further, as shown in Fig. 10, the receptacle member 6 has a pair of first fitting holes 661, 662 extending along the X-axis direction on its tip end surface 6A. The pair of first fitting holes 661, 662 are respectively positioned at both Y-direction side areas of the tip end surface 6A so as to sandwich the first concave portion 611. As described later, the pins 811, 812 of the positioning mechanism 8 are respectively inserted into the first fitting holes 661, 662.

Further, as shown in Figs. 9 to 11, the receptacle member 6 has a pair of rotational shaft portions 651, 652 respectively provided on both side surfaces 6E, 6F. The rotational shaft portion 651 is a cylindrical protrusion protruding from the side surface 6E toward the positive side of the Y-axis direction. The rotational shaft portion 652 is a cylindrical protrusion protruding from the side surface 6F toward the negative side of the Y-axis direction. The rotational shaft portions 651, 652 are coaxially provided along the Y-axis direction. As described later, the rotational shaft portions 651, 652 form a rotational axis J of a locking member 91 of the locking mechanism 9. Although the rotational shaft portions 651, 652 are formed integrally with the receptacle member 6 in the present embodiment, the present invention is not limited thereto. The rotational shaft portions 651, 652 may be formed separately from the receptacle member 6.

Further, the receptacle member 6 has a pair of engagement projections 641, 642 respectively provided on both side surfaces 6E, 6F and positioned closer to the tip end surface 7A than the rotational axis J. The engagement projection 641 is a roughly semicylindrical projection extending in the X-axis direction and projecting from the side surface 6E toward the positive side of the Y-axis direction. The engagement projection 642 is a roughly semicylindrical projection extending in the X-axis direction and projecting from the side surface 6F toward the negative side of the Y-axis direction. The engagement projections 641, 642 have a function of fixing the locking member 91 to the receptacle member 6 (a function of keeping a locked state) when the engagement projections 641, 642 are connected with the locking member 91 of the locking mechanism 9 with a snap-fitting connection as described later. Although the engagement projections 641, 642 are formed integrally with the receptacle member 6 in the present embodiment, the present invention is not limited thereto. The engagement projections 641, 642 may be formed separately from the receptacle member 6.

The receptacle member 6 has been explained in the above description. According to the above-mentioned receptacle member 6, the light L which is the parallel light passes through the optical path 623 connecting between the corresponding first collimator lens 621 and the corresponding second collimator lens 622. Thus, for example, even if a typical "optical waveguide" whose core is covered by a cladding and that can transmit the light L entered the core with reflecting the light L at a boundary between the core and the cladding is not used, it is possible to optically connect between the optical integrated circuit 3 and the optical fiber cable 4. Thus, the configuration of the receptacle member 6 becomes simpler, and thereby it is possible to reduce a manufacturing cost of the receptacle member 6.

### -Positioning mechanism 8-

As shown in Fig. 12, the positioning mechanism 8 has a function of positioning the receptacle member 6 and the plug member 7 to each other. The positioning mechanism 8 has the pair of pins 811, 812 that can be fitted with the receptacle member 6 and the plug member 7.

One end portion (X-direction negative side end portion) of the pin 811 is fitted (inserted) into the first fitting hole 661 of the receptacle member 6. Another end portion (X-direction positive side end portion) of the pin 811 is fitted (inserted) into the second fitting hole 761 of the plug member 7. On the other side, one end portion (X-direction negative side end portion) of the pin 812 is fitted (inserted) into the first fitting hole 662 of the receptacle member 6. Another end portion (X-axis positive side end portion) of the pin 812 is fitted (inserted) into the second fitting hole 762 of the plug member 7. With this configuration, relative displacement between the receptacle member 6 and the plug member 7 in the Y-axis direction and the Z-axis direction is restricted. As a result, as shown in Fig. 13, the receptacle member 6 and the plug member 7 are positioned to each other in a state that the tip end surface 6A of the receptacle member 6 directly faces and contacts the tip end surface 7A of the plug member 7 and the tip end surfaces of the optical fibers 40 directly faces the corresponding first collimator lenses 621. As described above, according to the positioning mechanism 8, it is possible to easily and more reliably position the receptacle member 6 and the plug member 7 to each other to optically connect between the receptacle member 6 and the optical fibers 40.

Specifically, since the pins 811, 812 are fitted with the tip end surface 6A of the receptacle member 6 and the tip end surface 7A of the plug member 7, it is possible to more accurately position the first collimator lenses 621 provided on the tip end surface 6A of the receptacle member 6 and the optical fibers 40 provided on the tip end surface 7A of the plug member 7.

In the present embodiment, the pins 811, 812 are fixed to the receptacle member 6 in a state that the pins 811, 812 are respectively fitted into the first fitting holes 661, 662 of the receptacle member 6. A method for fixing the pins 811, 812 to the receptacle member 6 is not particularly limited. For example, it is possible to use an adhesive for fixing the pins 811, 812 to the receptacle member 6. By fixing the pins 811, 812 to the receptacle member 6 in advance as described above, it is possible to easily connect between the receptacle member 6 and the plug member 7. Further, by fixing the pins 811, 812 to the receptacle member 6 rather than the plug member 7, it is possible to prevent the pins 811, 812 from interfering when the tip end surface 7A of the plug member 7 is cleaned, thereby easily performing this cleaning.

Constituent material for each of the pins 811, 812 is not particularly limited. For example, it is preferable that the constituent material is metallic material such as aluminum or stainless steel. With this configuration, it is possible to obtain the pins 811, 812 having high mechanical strength.

Although the positioning mechanism 8 has been described, the configuration of the positioning mechanism 8 is not particularly limited. For example, the pins 811, 812 may be fixed to the plug member 7, or the pins 811, 812 may not be fixed to both of the receptacle member 6 and the plug member 7. Further, in the case that the pins 811, 812 are fixed to the receptacle member 6 like the present embodiment, the pins 811, 812 may be formed integrally with the receptacle member 6.

### -Locking mechanism 9-

The locking mechanism 9 has a function of keeping the state that the receptacle member 6 and the plug member 7 are connected to each other. The locking mechanism 9 has the locking member 91 rotatably connected to the receptacle member 6.

The locking member 91 is a U-shaped member. As shown in Fig. 14, the locking member 91 has a top plate 92 and a pair of side plates 931, 932 respectively extending from both Y-axis direction end portions of the top plate 92 toward the negative side of the Z-axis direction. Further, as shown in Figs. 15 and 16, an engagement hole 941 with which the rotational shaft portion 651 of the receptacle member 6 is engaged is provided on a base end portion (an end portion located on the negative side of the X-axis direction) of the side plate 931. An engagement hole 942 with which the rotational shaft portion 652 of the receptacle member 6 is engaged is provided on a base end portion (an end portion located on the negative side of the X-axis direction) of the side plate 932. By respectively engaging the engagement holes 941, 942 with the rotational shaft portions 651, 652 as described above, the locking member 91 is coupled to the receptacle member 6 so that the locking member 91 can be rotated around the rotational axis J. Alternatively, contrary to the present embodiment, the rotational shaft portions may be provided on the locking member 91 and the engagement holes with which the rotational shaft portions are respectively engaged may be provided on the receptacle member 6.

Further, as shown in Fig. 14, the locking member 91 has a pair of biasing portions 951, 952 respectively provided on tip end portions (end portions located on the positive side of the X-axis direction) of the side plates 931, 932 and biasing the plug member 7 toward the receptacle member 6 in the state that the plug member 7 is positioned by the positioning mechanism 8. The biasing portion 951 has a contact portion 951a that is provided at the tip end portion of the side plate 931 and contacts the base end surface 7B of the plug member 7, and a U-shaped spring portion 951b that connects between the contact portion 951a and the side plate 931. Similarly, the biasing portion 952 has a contact portion 952a that is provided at the tip end portion of the side plate 932 and contacts the base end surface 7B of the plug member 7, and a U-shaped spring portion 952b connecting between the contact portion 952a and the side plate 932. Further, a separation distance D2 between the rotational axis J and the contact portions 951a, 952a in a natural state (the unlocked state shown in Fig. 2) is slightly smaller than a separation distance D1 between the rotational axis J and the base end surface 7B of the plug member 7 in the state that the plug member 7 is positioned by the positioning mechanism 8.

In the above-mentioned locking mechanism 9, the locking member 91 is rotated around the rotational axis J in the state that the receptacle member 6 and the plug member 7 are positioned to each other by the positioning mechanism 8 as shown in Fig. 17. Next, the contact portions 951a, 952a are brought into contact with the base end surface 7B of the plug member 7 as shown in Fig. 14. With this movement, displacement of the plug member 7 with respect to the receptacle member 6 in the X-axis direction is restricted, thereby keeping the state that the receptacle member 6 and the plug member 7 are positioned to each other. Hereinafter, this state is also referred to as the "locked state". Conversely, by reversely rotating the locking member 91 around the rotational axis J from the locked state, the locked state is released as shown in Fig. 17 and the plug member 7 can be removed from the receptacle member 6. Hereinafter, this state is also referred to as the "unlocked state". Thus, by switching the locking mechanism 9 between the locked state and the unlocked state, it is possible to easily and detachably attach the plug member 7 to the receptacle member 6.

Especially, since the separation distance D2 is smaller than the separation distance D1 (D2 < D1) as described above, the spring portions 951b, 952b of the biasing portions 951, 952 are elastically deformed in the locked state and thus the contact portions 951a, 952a bias the plug member 7 toward the receptacle member 6 due to their restoring force. Thus, the plug member 7 is pressed against the receptacle member 6, thereby more firmly holding the receptacle member 6 and the plug member 7. Further, reaction force applied to the locking member 91 due to the biasing of the plug member 7 is transmitted to the receptacle member 6 coupled to the locking member 91. Thus, stress is less likely to be generated in the optical integrated circuit 3, thereby effectively preventing damage of the optical integrated circuit 3.

Further, as shown in Figs. 15 and 16, the locking member 91 has engagement holes 961, 962 respectively provided on the side plates 931, 932. In the locked state, the engagement holes 961, 962 are respectively engaged with the engagement projections 641, 642 provided on the receptacle member 6 with the snap-fit connection. Thus, unintended rotation of the locking member 91 around the rotational axis J is restricted, thereby more reliably keeping the locked state. Further, the snap-fit connection between the engagement holes 961, 962 and the engagement projections 641, 642 can be released by applying predetermined force. Thus, it is possible to easily release the locked state when necessary.

Further, the locking member 91 has a rectangular window portion 921 formed in the top plate 92. The window portion 921 is provided so as to overlap a boundary between the receptacle member 6 and the plug member 7 in the locked state. Thus, it is possible to check a connection state between the receptacle member 6 and the plug member 7 (for example, whether the tip end surfaces 7A, 6A correctly contact each other) through the window portion 921. Although the window portion 921 is formed as a through-hole passing through the top plate 92 in a thickness direction in the present embodiment, the present invention is not limited thereto. The window portion 921 may also be formed by a transparent plate member.

For example, the above-mentioned locking member 91 may be formed from resin material, metal material or the like. The locking member 91 of the present embodiment is formed from various metal material such as stainless steel, copper alloy, and aluminum alloy, which have all of heat resistance, springiness, strength, and other properties required for the locking member 91.

The optoelectronic hybrid substrate 1 has been explained in the above description. The optical connector 5 of the optoelectronic hybrid substrate 1 is provided as the optical connector 5 for connecting between the optical integrated circuit 3 and the optical fibers 40. The optical connector 5 has the plug member 7 to be attached to the optical fibers 40, the receptacle member 6 arranged on the optical integrated circuit 3 and connected to the plug member 7 for transmitting the light L between the optical integrated circuit 3 and the optical fibers 40, and the locking mechanism 9 for switching between the locked state for keeping the state that the plug member 7 and the receptacle member 6 are connected to each other and the unlocked state that the plug member 7 and the receptacle member 6 are detachably from each other. By providing the locking mechanism 9 that can switch between the locked state and the unlocked state as described above, it is possible to easily and detachably attach the optical fibers 40 to the receptacle member 6. Therefore, the optical fibers 40 can be easily and detachably attached to the optical integrated circuit 3 through the receptacle member 6.

Further, the receptacle member 6 has the first collimator lenses 621 respectively facing the optical fibers 40 and the second collimator lenses 622 facing the optical integrated circuit 3 as described above. The light L passes through the optical path 623 between the first collimator lens 621 and the second collimator lens 622. With this configuration, the light L which is the parallel light can pass through the optical path 623 in the receptacle member6. Thus, for example, even if the typical "optical waveguide" whose core is covered by the cladding and that can transmit light entered the core with reflecting the light at the boundary between the core and the cladding is not used as the receptacle member 6, it is possible to optically connect between the optical integrated circuit 3 and the optical fibers 40. Thus, the configuration of the receptacle member 6 is simplified, thereby reducing the manufacturing cost of the receptacle member 6.

Further, the first collimator lens 621 is spaced apart from the corresponding optical fiber 40 and the second collimator lenses 622 are spaced apart from the optical integrated circuit 3 as described above. With this configuration, it is possible to avoid the contact between the first collimator lenses 621 and the plug member 7, thereby effectively preventing the damage of the first collimator lenses 621 caused by the contact with the plug member 7. Furthermore, it is possible to avoid the contact between the second collimator lenses 622 and the optical integrated circuit 3, thereby effectively suppressing the damage of the second collimator lenses 622 caused by the contact with the optical integrated circuit 3.

Further, the receptacle member 6 has the light-reflecting surface 631a that is provided in the optical path 623 and changes the direction of the optical path 623 as described above. With this configuration, the optical path 623 can be freely designed, thereby increasing the design flexibility of the optical connector 5.

Further, the optical connector 5 has the positioning mechanism 8 that includes the pins 811, 812 that can be engaged with the receptacle member 6 and the plug member 7 and positions the receptacle member 6 and the plug member 7 to each other as described above. With this configuration, it is possible to easily position the receptacle member 6 and the plug member 7 to each other.

Further, as described above, the receptacle member 6 has the first fitting holes 661, 662 that are provided on the tip end surface 6A which is the surface facing the plug member 7 and into which the pins 811, 812 are respectively fitted. The plug member 7 has the second fitting holes 761, 762 that are provided on the tip end surface 7A which is the surface facing the receptacle member 6 and into which the pins 811, 812 are respectively fitted. With this configuration, it is possible to more accurately position the first collimator lenses 621 provided on the tip end surface 6A of the receptacle member 6 and the optical fibers 40 provided on the tip end surface 7A of the plug member 7 to each other.

Further, the pins 811, 812 are fixed to the receptacle member 6 in the state that the pins 811, 812 are respectively fitted into the first fitting holes 661, 662 as described above. By fixing the pins 811, 812 to the receptacle member 6 as described above, it is possible to easily connect the plug member 7 to the receptacle member 6. Furthermore, by fixing the pins 811, 812 to the receptacle member 6 rather than the plug member 7, it is possible to prevent the pins 811, 812 from interfering when the tip end surface 7A of the plug member 7 is cleaned. Thus, it is possible to easily perform the cleaning.

Further, the locking mechanism 9 has the locking member 91 rotatably connected to the receptacle member 6 as described above. The locked state is achieved by engaging the locking member 91 with the plug member 7 in the state that the receptacle member 6 and the plug member 7 are connected to each other. With this configuration, the configuration of the locking mechanism 9 is simplified. Further, it is possible to easily switch between the locked state and the unlocked state.

Further, the locking member 91 has the biasing portions 951, 952 that bias the plug member 7 toward the receptacle member 6 in the locked state as described above. With this configuration, the plug member 7 is pressed against the receptacle member 6 in the locked state, thereby more firmly holding the receptacle member 6 and the plug member 7.

Further, the locking member 91 has the window portion 921 that overlaps the boundary between the receptacle member 6 and the plug member 7 in the locked state as described above. With this configuration, it is possible to check the connection state between the receptacle member 6 and the plug member 7 through the window portion 921 even in the locked state.

### <Second embodiment>

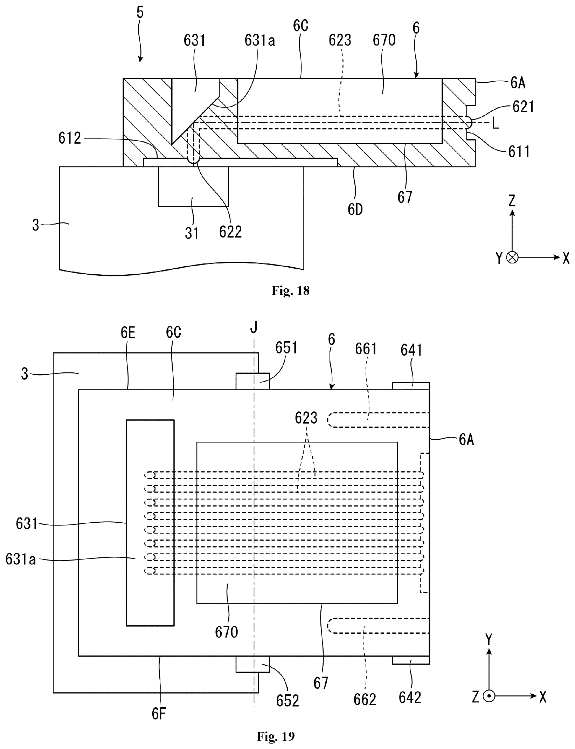

Fig. 18 is a cross-sectional view showing a receptacle member of an optical connector according to the second embodiment. Fig. 19 is a top view of the receptacle member shown in Fig. 18.

An optical connector 5 of the present embodiment has the same configuration as the configuration of the optical connector 5 of the above-described first embodiment except that the configuration of the receptacle member 6 is modified. Thus, the following description primarily focuses on differences between the above-described first embodiment and the present embodiment, and description for the same matters will be omitted. Further, in each drawing for the present embodiment, the identical reference numerals are used for components identical to the components of the above-described embodiment.

As shown in Figs. 18 and 19, a receptacle member 6 of the present embodiment has a recess 67 provided on its upper surface 6C and arranged so as to cross each optical path 623 in the Y-axis direction. Thus, the receptacle member 6 has an air layer 670 formed by the recess 67 in the middle of each optical path 623. The light L passes through this air layer 670 while passing through the optical path 623. By providing the air layer 670 in the middle of each optical path 623 as described above, it is possible to reduce loss of the light L caused by passing through the optical path 623 compared to the case of the above-described first embodiment that the entire of each optical path 623 is formed from the resin material or the glass material. Thus, it is possible to transmit the light L with greater intensity.

In the optical connector 5 of the present embodiment, the receptacle member 6 has the air layer 670 in each optical path 623 and the light L passes through the air layer 670 as described above. With this configuration, it is possible to reduce the loss of the light L caused by passing through the optical path 623.

According to the above-described second embodiment, it is also possible to achieve the same effects as the effects of the above-described first embodiment.

### <Third embodiment>

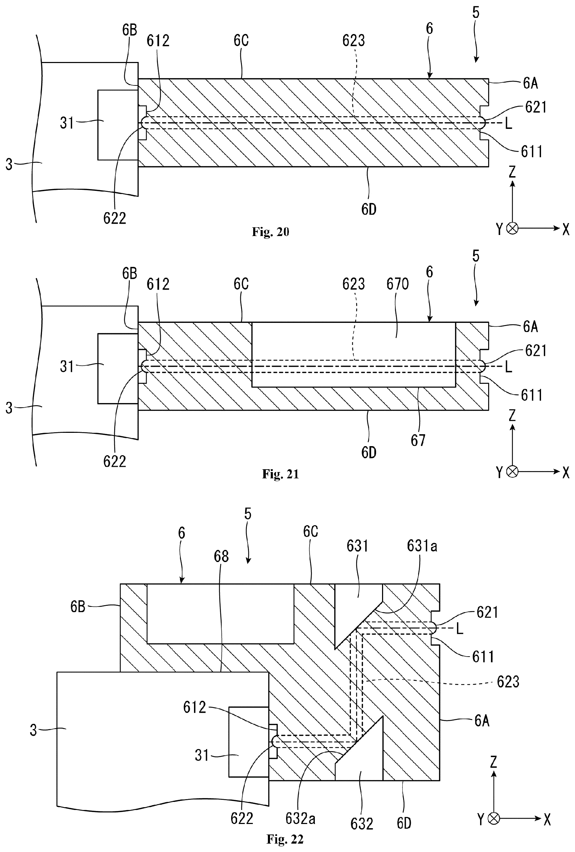

Fig. 20 is a cross-sectional view showing a receptacle member of an optical connector according to the third embodiment. Fig. 21 is a cross-sectional view showing a modified example of the receptacle member shown in Fig. 20.

An optical connector 5 of the present embodiment has the same configuration as the configuration of the optical connector 5 of the above-described first embodiment except that the configuration of the receptacle member 6 is modified. Thus, the following description primarily focuses on differences between the above-described first embodiment and the present embodiment, and description for the same matters will be omitted. Further, in each drawing for the present embodiment, the identical reference numerals are used for components identical to the components of the above-described embodiment.

As shown in Fig. 20, in the present embodiment, the optical axis of the light receiving and emitting unit 31 coincides with the X-axis. In contrast, compared to the configuration of the above-described first embodiment, the receptacle member 6 is configured so that the first recess 631 (the light-reflecting surface 631a) is omitted, a second concave portion 612 is provided on its base end surface 6B, and a plurality of second collimator lenses 622 are provided on a bottom surface of the second concave portion 612. Namely, in the receptacle member 6 of the present embodiment, each of the first collimator lenses 621 and the corresponding second collimator lens 622 are arranged so as to be aligned in the X-axis direction and each optical path 623 is linear along the X-axis. Further, the base end surface 6B of the receptacle member 6 is fixed to a side surface of the optical integrated circuit 3 with an adhesive (not shown) in a state the plurality of second collimator lenses 622 are aligned with the optical axis of the light receiving and emitting unit 31.

According to the above-described third embodiment, it is also possible to achieve the same effects as the effects of the above-described first embodiment. Further, similar to the above-described second embodiment, the recess 67 may be provided in the receptacle member 6 of the present embodiment as shown in Fig. 21 to arrange the air layer 670 in the middle of each optical path 623.

### <Fourth embodiment>

Fig. 22 is a cross-sectional view showing a receptacle member of an optical connector according to the fourth embodiment.

An optical connector 5 of the present embodiment has the same configuration as the configuration of the optical connector 5 of the above-described first embodiment except that the configuration of the receptacle member 6 is modified. Thus, the following description primarily focuses on differences between the above-described first embodiment and the present embodiment, and description for the same matters will be omitted. Further, in each drawing for the present embodiment, the identical reference numerals are used for components identical to the components of the above-described embodiment.

In the present embodiment, the optical axis of the light receiving and emitting unit 31 coincides with the X-axis as shown in Fig. 22. In contrast, the receptacle member 6 of the present embodiment has a rectangular notch 68 formed by cutting away a corner between the lower surface 6D and the base end surface 6B and the receptacle member 6 is fixed to the optical integrated circuit 3 with an adhesive (not shown) so that an inside corner of the notch 68 is fitted with an outside corner of the optical integrated circuit 3.

Further, in the receptacle member 6 of the present embodiment, a second concave portion 612 is provided on a side surface of the notch 68 and a plurality of second collimator lenses 622 are provided on a bottom surface of the second concave portion 612 and at a position directly facing the light receiving and emitting unit 31. Furthermore, in the receptacle member 6 of the present embodiment, a second recess 632 extending along the Y-axis is provided on the lower surface 6D and an inner surface of the second recess 632 forms a light-reflecting surface 632a (mirror) for reflecting the light L passing through the receptacle member 6. The light-reflecting surfaces 631a, 632a are aligned in the Z-axis direction. The light-reflecting surface 632a is planar like the light-reflecting surface 631a and is inclined with respect to the X-axis at 45°.

The light L emitted from the light receiving and emitting unit 31 is collimated into parallel light by the corresponding second collimator lens 622 directly facing the light receiving and emitting unit 31 and then enters the receptacle member 6. Next, the parallel light L travels in the receptacle member 6 in the positive side of the X-axis direction, is then reflected by the light-reflecting surface 632a by 90° to travel on the positive side of the Z-axis direction, is further reflected by the light-reflecting surface 632a by 90° to travel in the positive side of the X-axis direction, and is emitted from the corresponding first collimator lens 621 to the outside of the receptacle member 6. The light L emitted from the first collimator lens 621 is focused by the first collimator lens 621 and enters the optical fiber 40 from the tip end surface of the optical fiber 40 directly facing the first collimator lens 621 near its focal point.

Conversely, the light L emitted from the optical fiber 40 is collimated into parallel light by the corresponding first collimator lens 621 directly facing the optical fiber 40 and enters the receptacle member 6. Next, the parallel light L travels in the receptacle member 6 in the negative side of the X-axis, is then reflected by the light-reflecting surface 631a by 90° to travel in the negative side of the Z-axis, is further reflected by the light-reflecting surface 632a by 90° to travel in the negative side of the X-axis, and is emitted from the corresponding second collimator lens 622 to the outside of the receptacle member 6. The light L emitted from the second collimator lens 622 is focused by the second collimator lens 622 and enters the light receiving and emitting unit 31 directly facing the second collimator lens 622 near its focal point.

According to the above-described configuration, for example, it is possible to shorten the length of the optical connector 5 in the X-axis direction compared to the above-described third embodiment. Thus, it is possible to obtain the optical connector 5 whose size is further reduced.

With the above-described fourth embodiment, it is also possible to achieve the same effects as the effects of the above-described first embodiment.

### <Fifth embodiment>

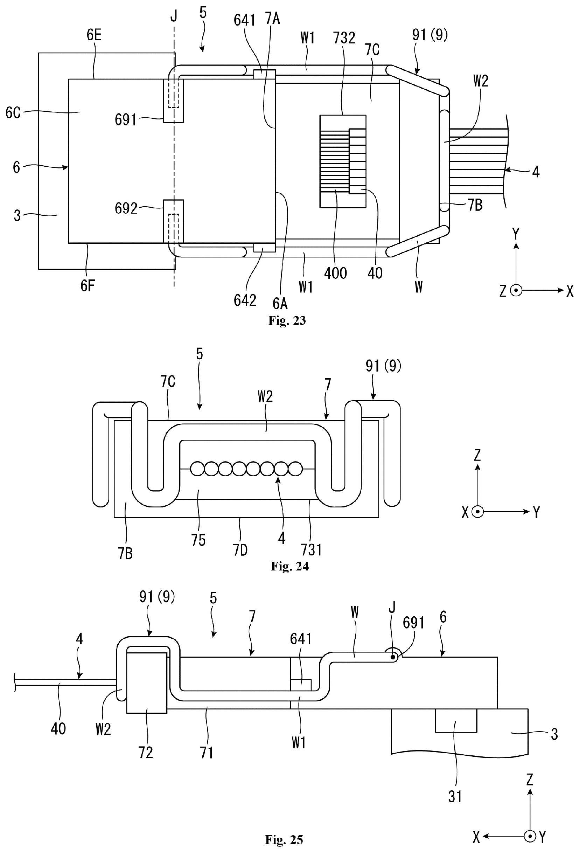

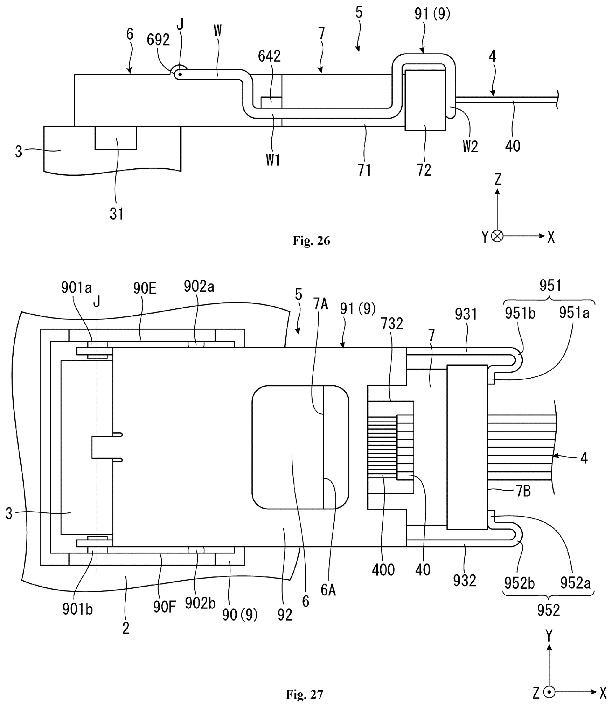

Fig. 23 is a top view showing a locking member of an optical connector according to the fifth embodiment. Fig. 24 is a front view of the locking member. Fig. 25 is a side view of the locking member. Fig. 26 is another side view of the locking member viewed from an opposite side of a viewing side of Fig. 25.

An optical connector 5 of the present embodiment has the same configuration as the configuration of the optical connector 5 of the above-described first embodiment except that the configuration of the locking member 91 is modified. Thus, the following description primarily focuses on differences between the above-described first embodiment and the present embodiment, and description for the same matters will be omitted. Further, in each drawing for the present embodiment, the identical reference numerals are used for components identical to the components of the above-described embodiment.

Although the locking member 91 is formed by bending the plate material in the above-described first embodiment, the locking member 91 of the present embodiment is formed by bending a wire W as shown in Figs. 23 to 26. In this locking member 91, both end portions of the wire W are respectively engaged with holes 691, 692 formed on the both side surfaces 6E, 6F of the receptacle member 6 as shown in Fig. 23. With this configuration, the locking member 91 is connected to the receptacle member 6 so that the locking member 91 can be rotated around the rotational axis J.

Further, the locking member 91 has a contact portion W2 that contacts the base end surface 7B of the plug member 7 in the locked state. As shown in Fig. 24, the contact portion W2 is formed so as to avoid contact with the optical fiber cable 4. A separation distance between the rotational axis J and the contact portion W2 in the natural state (the unlocked state) is smaller than a separation distance between the rotational axis J and the base end surface 7B. In the locked state, the wire W is entirely or partially deformed elastically and the wire W biases the plug member 7 toward the receptacle member 6 with its restoring force.

Further, as shown in Figs. 25 and 26, the locking member 91 has an engagement portion W1 that bridges over the engagement projections 641, 642 in the locked state and are engaged with the engagement projections 641, 642. With this configuration, it is possible to restrict unintended rotation of the locking member 91 around the rotational axis J, thereby more reliably keeping the locked state.

With the above-described fifth embodiment, it is also possible to achieve the same effects as the effects of the above-described first embodiment.

### <Sixth embodiment>

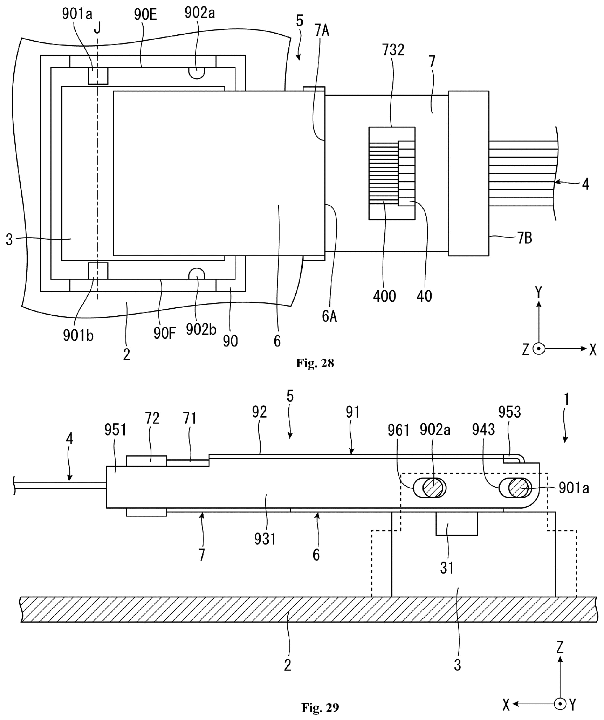

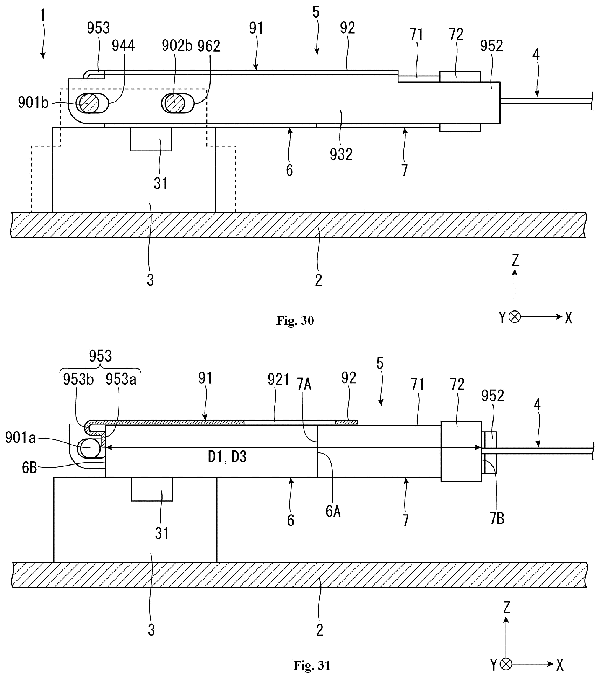

Fig. 27 is a top view showing a locking mechanism of an optical connector according to the sixth embodiment. Fig. 28 is a top view showing a base member of the optical connector. Fig. 29 is a side view showing a locking member of the optical connector. Fig. 30 is another side view of the locking member viewed from an opposite side of a viewing side of Fig. 29. Fig. 31 is a cross-sectional view of the locking member.

An optical connector 5 of the present embodiment has the same configuration as the configuration of the optical connector 5 of the above-described first embodiment except that the configuration of the locking mechanism 9 is modified. Thus, the following description primarily focuses on differences between the above-described first embodiment and the present embodiment, and description for the same matters will be omitted. Further, in each drawing for the present embodiment, the identical reference numerals are used for components identical to the components of the above-described embodiment.

As shown in Fig. 27, the locking mechanism 9 of the present embodiment has a base member 90 fixed to the substrate 2 and a locking member 91 rotatably connected to the base member 90.

As shown in Fig. 28, the base member 90 is fixed to the substrate 2. Further, the base member 90 is formed so as to have a rectangular frame shape surrounding the optical integrated circuit 3. In this regard, the base member 90 does not contact the optical integrated circuit 3 arranged inside the base member 90. Further, the base member 90 has a pair of rotational shaft portions 901a, 901b respectively provided on its both inner side surfaces 90E, 90F. The rotational shaft portion 901a is a cylindrical protrusion protruding from the inner surface 90E toward the negative side of the Y-axis direction. The rotational shaft portion 901b is a cylindrical protrusion protruding from the inner surface 90F toward the positive side of the Y-axis direction. These rotational shaft portions 901a, 901b are coaxially provided along the Y-axis and form the rotational axis J of the locking member 91.

Further, the base member 90 has a pair of engagement projections 902a, 902b respectively provided on both inner surfaces 90E, 90F and provided closer to the side of the tip end surface 6A than the rotational axis J. As shown in Fig. 28, the engagement projection 902a protrudes from the inner surface 90E toward the negative side of the Y-axis direction and its tip end portion is rounded into a hemispherical shape. Similarly, the engagement projection 902b protrudes from the inner surface 90F toward the positive side of the Y-axis direction and its tip end portion is rounded into a hemispherical shape. The engagement projections 902a, 902b are connected to the locking member 91 in the locked state with a snap-fitting connection and has a function of suppressing unintended rotation of the locking member 91 to keep the locked state.

The above-described base member 90 may be formed from, for example, resin material, metal material, or the like. Similar to the receptacle member 6, the locking member 91 of the present embodiment may be formed from various resin materials such as polyetherimide (PEI), polyimide (PI), polyamide (PA), polybutylene terephthalate (PBT), PPS (polyphenylene sulfide), LCP (liquid crystal polymer) or the like, which have all of heat resistance, strength, molding shrinkage rate, thermal expansion coefficient, flame retardancy, water absorption and the like required for the base member 90.

Similar to the above-described first embodiment, the locking member 91 has a U-shape and has a top plate 92 and a pair of side plates 931, 932 respectively extending from both Y-axis direction end portions of the top plate 92 toward the negative side of the Z-axis direction as shown in Fig. 27. Further, as shown in Figs. 29 and 30, an elongated hole 943 with which the rotational shaft portion 901a of the base member 90 is engaged is provided at the base end portion of the side plate 931, and an elongated hole 944 with which the rotational shaft portion 901b of the base member 90 is engaged is provided at the base end portion of the side plate 932. By respectively engaging the elongated holes 943, 944 with the rotational shaft portions 901a, 901b as described above, the locking member 91 is connected to the base member 90 so that the locking member 91 can be rotated with respect to the base member 90 around the rotational axis J. Further, each of the elongated holes 943, 944 extends in the X-axis direction in the locked state. Thus, the locking member 91 can be slid in the X-axis direction with respect to the base member 90 in the locked state. Conversely to the present embodiment, the rotational shaft portions may be provided on the locking member 91 and the elongated holes with which the rotational shaft portions are respectively engaged may be provided on the base member 90.

Further, the locking member 91 has a pair of biasing portions 951, 952 respectively provided at the tip end portions of the side plates 931, 932, and additionally has a biasing portion 953 provided at a base end portion of the top plate 92 as shown in Fig. 31. In the locked state, the plug member 7 and the receptacle member 6 positioned to each other by the positioning mechanism 8 are sandwiched from both sides of the X-axis direction by the biasing portions 951, 952 and the biasing portion 953, and thereby it is possible to keep the state that the receptacle member 6 and the plug member 7 are positioned to each other. Similar to the biasing portions 951, 952, the biasing portion 953 has a contact portion 953a that contacts the base end surface 6B of the receptacle member 6 and a U-shaped spring portion 953b that connects between the contact portion 953a and the top plate 92. Further, a separation distance D3 between the contact portion 953a and the contact portions 951a, 952a in the natural state (the unlocked state) is slightly smaller than the separation distance D1 between the rotational axis J and the base end surface 7B of the plug member 7 in the state that the plug member 7 and the receptacle member 6 are positioned by the positioning mechanism 8 (that is, D3 < D1).

Further, as shown in Figs. 29 and 30, the locking member 91 has the engagement holes 961, 962 respectively formed on the side plates 931, 932. In the locked state, these engagement holes 961, 962 are respectively engaged with the engagement projections 902a, 902b provided on the base member 90 with the snap-fit connection. Thus, unintended rotation of the locking member 91 around the rotational axis J is restricted in the locked state, thereby more reliably keeping the locked state. In this regard, each of the engagement holes 961, 962 is an elongated hole extending in the X-axis direction in the locked state and is configured so as not to impede the sliding of the locking member 91 in the X-axis direction with respect to the base member 90 in the locked state.

In the above-described locking mechanism 9, the locking member 91 is rotated around the rotational axis J in the state that the receptacle member 6 and the plug member 7 are positioned to each other by the positioning mechanism 8 to allow the contact portions 951a, 952a to contact the base end surface 7B of the plug member 7 and allow the contact portion 953a to contact the base end surface 6B of the receptacle member 6. With this configuration, the receptacle member 6 and the plug member 7 are sandwiched by the locking member 91, thereby keeping the state that the receptacle member 6 and the plug member 7 are positioned to each other. In this state, the engagement holes 961, 962 of the locking member 91 are respectively engaged with the engagement projections 902a, 902b of the base member 90 with the snap-fit connection, thereby keeping the locked state. Conversely, by releasing the snap-fit connection and reversely rotating the locking member 91 around the rotational axis J from the locked state, the locked state is changed to the unlocked state. In the unlocked state, it is possible to remove the plug member 7 from the receptacle member 6.

Especially, since the locking member 91 can be slid in the X-axis direction with respect to the base member 90 in the locked state, load is less likely to be applied to the base member 90 or the optical integrated circuit 3 in the state that the locking member 91 is in the locked state. Thus, it is possible to effectively suppress damage of these components.

Further, since the separation distance D3 is smaller than the separation distance D1 (D3 < D1) as described above, each of the spring portions 951b, 952b, 953b of the biasing portions 951, 952, 953 is elastically deformed in the locked state, and the plug member 7 and the receptacle member 6 are pressed to each other by the contact portions 951a, 952a, 953a due to their restoring force. Thus, the receptacle member 6 and the plug member 7 are more firmly held.

In the optical connector 5 of the present embodiment, the optical integrated circuit 3 is mounted on the substrate 2 as described above. Further, the locking mechanism 9 has the base member 90 to be fixed to the substrate 2 and the locking member 91 rotatably connected to the base member 90. The lock state is achieved by engaging the locking member 91 with the receptacle member 6 and the plug member 7 in the state that the receptacle member 6 and the plug member 7 are connected to each other. With this configuration, the configuration of the locking mechanism 9 is simplified.

Further, the pair of rotational shaft portions 901a, 901b are formed on one of the base member 90 and the locking member 91 and the pair of elongated holes 943, 944, with which the pair of rotational shaft portions 901a, 901b, are respectively engaged are formed on another one of the base member 90 and the locking member 91. Specifically, in the present embodiment, the pair of rotational shaft portions 901a, 901b are formed on the base member 90 and the pair of elongated holes 943, 944 with which the pair of rotational shaft portions 901a, 901b are respectively engaged are formed on the locking member 91. Further, the locking member 91 can be slid with respect to the base member 90 along the elongated holes 943, 944. With this configuration, the load is less likely to be applied to the base member 90 or the optical integrated circuit 3 in the state that the locking member 91 is in the locked state, thereby effectively suppressing the damage of these components.

According to the above-described sixth embodiment, it is also possible to achieve the same effects as the effect of the above-described first embodiment.

### <Seventh Embodiment>

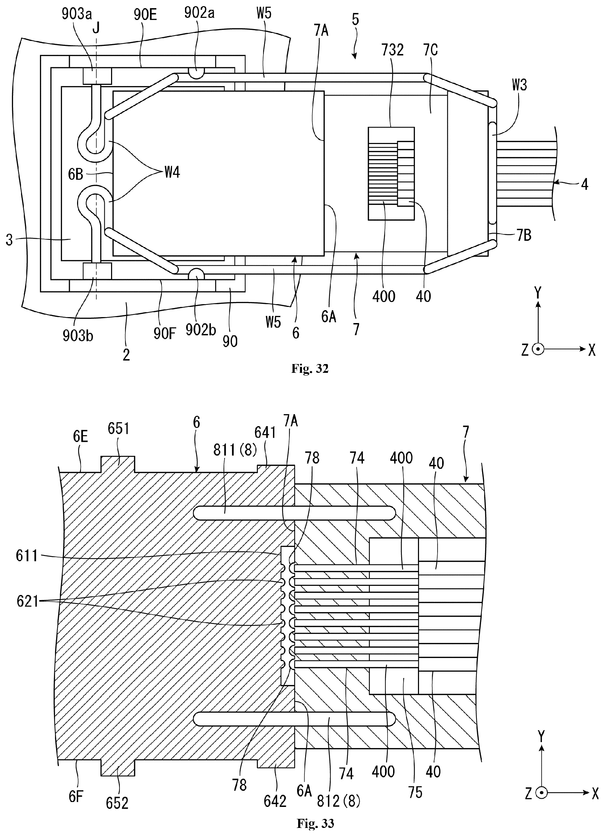

Fig. 32 is a top view showing an optical connector according to a seventh embodiment.

An optical connector 5 of the present embodiment has the same configuration as the configuration of the optical connector 5 of the above-described sixth embodiment except that the configuration of the locking member 91 is modified. Thus, the following description primarily focuses on differences between the above-described sixth embodiment and the present embodiment, and description for the same matters will be omitted. Further, in each drawing for the present embodiment, the identical reference numerals are used for components identical to the components of the above-described embodiment.

Although the locking member 91 is formed by bending the plate material in the above-described sixth embodiment, the locking member 91 of the present embodiment is formed by bending a wire W as shown in Fig. 32. In the above-described locking member 91, both end portions of the wire W are respectively engaged with holes 903a, 903b respectively formed on both inner surfaces 90E, 90F of the base member 90, thereby coupling the locking member 91 to the base member 90 so that the locking member 91 can be rotated around the rotational axis J with respect to the base member 90.

Further, the locking member 91 has a contact portion W3 that contacts the base end surface 7B of the plug member 7 in the locked state, and a contact portion W4 that contacts the base end surface 6B of the receptacle member 6 in the locked state. A separation distance between the contact portion W3 and the contact portion W4 is smaller than the separation distance between base end surfaces 6B, 7B in the natural state (the unlocked state). In the locked state, the wire W is entirely or partially deformed elastically, and the plug member 7 and the receptacle member 6 are pressed to each other by restoring force of the wire W. Further, the locking member 91 has an engagement portion W5 that bridges over the engagement projections 902a, 902b and is engaged with the engagement projections 902a, 902b in the locked state. With this configuration, it is possible to restrict unintended rotation of the locking member 91 around the rotational axis J in the locked state, thereby more reliably keeping the locked state. In this regard, the contact portion W3 has the same configuration similar as the configuration of the contact portion W2 of the above-described fifth embodiment above, for example.

According to the above-described seventh embodiment, it is also possible to achieve the same effects as the effects of the above-described first embodiment.

### <Eighth embodiment>

Fig. 33 is a cross-sectional view showing an optical connector according to the eighth embodiment.

An optical connector 5 of the present embodiment has the same configuration as the configuration of the optical connector 5 of the above-described first embodiment except that the configuration of the plug member 7 is modified. Thus, the following description primarily focuses on differences between the above-described first embodiment and the present embodiment, and description for the same matters will be omitted. Further, in each drawing for the present embodiment, the identical reference numerals are used for components identical to the components of the above-described embodiment.

As shown in Fig. 33, the plug member 7 of the present embodiment has a plurality of lenses 78 provided on the tip end surface 7A. Each lens 78 is provided so as to overlap the insertion hole 74 and close a tip side opening of the insertion hole 74. The tip end surface of each optical fiber 40 is abutted against a rear surface of the lens 78. Namely, each lens 78 is positioned between the corresponding first collimator lens 621 and the tip end surface of the optical fiber 40. Further, each lens 78 is a convex lens that focuses the light L emitted from the optical fiber 40 near the first collimator lens 621 directly facing the lens 78. With this configuration, it is possible to prevent the light L emitted from the optical fiber 40 from spreading and allow the light L to efficiently enter the receptacle member 6 through the first collimator lens 621. Thus, it is possible to effectively suppress the loss of the light L.

For example, the above-described plug member 7 is formed from light-transmissive material such as resin material and glass material, similar to the receptacle member 6. The plug member 7 of the present embodiment is formed from the resin material. By forming the plug member 7 from the resin material, it is possible to easily form the plug member 7. Although the resin material is not particularly limited, examples of the resin material contain polyetherimide (PEI), polyimide (PI), polyamide (PA), methacrylic acid methyl ester (PMMA), polycarbonate (PC), and other resin material that have all of heat resistance, strength, molding shrinkage rate, thermal expansion coefficient, flame retardancy, water absorption and the like required for the plug member 7.

In the optical connector 5 of the present embodiment, the plug member 7 has the lenses 78 respectively positioned between the first collimator lenses 621 and the tip end surfaces of the optical fibers 40. With this configuration, it is possible to prevent the light L emitted from the optical fiber 40 from spreading and allow the light L to efficiently enter the receptacle member 6 through the first collimator lens 621. Thus, it is possible to effectively suppress the loss of the light L.

According to the above-described eighth embodiment, it is also possible to achieve the same effects as the effects of the first embodiment described above.

Although the optical connector of the present invention has been described based on the illustrated embodiments, the optical connector of the present invention is not limited thereto. The configuration of each component may be replaced with any configuration having similar functions. Further, other arbitrary components may be added to the present invention. Furthermore, the embodiments may be appropriately combined with each other.

### INDUSTRIAL APPLICABILITY

The optical connector of the present invention has the locking mechanism for switching between the locked state for keeping the state that the plug member and the receptacle member are connected to each other and the unlocked state that the plug member and the receptacle member are detachable from each other. Therefore, according to the optical connector of the present invention, it is possible to easily and detachably attach the optical fiber to the receptacle member. As a result, it is possible to easily and detachably attach the optical fiber to the optical integrated circuit through the receptacle member. Accordingly, the present invention has industrial applicability.

## Claims

1. An optical connector for connecting between an optical integrated circuit and an optical fiber, comprising:
a plug member to be attached to the optical fiber;
a receptacle member that should be arranged on the optical integrated circuit and is connected to the plug member for transmitting light between the optical integrated circuit and the optical fiber; and
a locking mechanism for switching between a locked state for keeping a state that the plug member and the receptacle member are connected to each other and an unlocked state that the plug member and the receptacle member are detachable from each other.

2. The optical connector as claimed in claim 1, wherein the receptacle member has:
a first collimator lens that should face the optical fiber, and
a second collimator lens that should face the optical integrated circuit, and
wherein the light passes through an optical path between the first collimator lens and the second collimator lens.

3. The optical connector as claimed in claim 2, wherein the first collimator lens and the optical fiber are spaced apart from each other, and
wherein the second collimator lens and the optical integrated circuit are spaced apart from each other.

4. The optical connector as claimed in claim 2, wherein the plug member has a lens positioned between the first collimator lens and a tip end surface of the optical fiber.

5. The optical connector as claimed in claim 2, wherein the receptacle member has a light-reflecting surface provided in the optical path to change a direction of the optical path.

6. The optical connector as claimed in claim 2, wherein the receptacle member has an air layer in the optical path, and
wherein the light passes through the air layer.

7. The optical connector as claimed in claim 1, further comprising a positioning mechanism for positioning the receptacle member and the plug member,
wherein the positioning mechanism includes a pin to be fitted to the receptacle member and the plug member.

8. The optical connector as claimed in claim 7, wherein the receptacle member has a first fitting hole that is provided on a surface facing the plug member and into which the pin should be fitted, and
wherein the plug member has a second fitting hole that is provided on a surface facing the receptacle member and into which the pin should be fitted.

9. The optical connector as claimed in claim 8, wherein the pin is fixed to the receptacle member in a state that the pin is fitted in the first fitting hole.

10. The optical connector as claimed in claim 1, wherein the locking mechanism has a locking member rotatably connected to the receptacle member, and
wherein the locking state is achieved by engaging the locking member with the plug member in a state that the receptacle member and the plug member are connected to each other.

11. The optical connector as claimed in claim 1, wherein the optical integrated circuit is mounted on a substrate,
wherein the locking mechanism has:
a base member to be fixed to the substrate, and
a locking member rotatably coupled to the base member, and
wherein the locking state is achieved by engaging the locking member with the receptacle member and the plug member in a state that the receptacle member and the plug member are connected to each other.

12. The optical connector as claimed in claim 11, wherein a pair of rotational shaft portions are formed on one of the base member and the locking member,
wherein a pair of elongated holes respectively engaged with the pair of rotational shaft portions are formed on another one of the base member and the locking member, and
wherein the locking member can be slid with respect to the base member along the elongated holes.

13. The optical connector as claimed in claim 10 or 11, wherein the locking member has a biasing portion that biases the plug member toward the receptacle member in the locked state.

14. The optical connector as claimed in claim 10 or 11, wherein the locking member has a window portion overlapping a boundary between the receptacle member and the plug member in the locked state.
